# EUROPEAN PATENT APPLICATION

(11) **EP 1 796 092 A2**
(43) Date of publication of application: **13.06.2007**
(21) Application number: 06125506.3
(22) Date of filing: 06.12.2006
(51) Int. Cl.: G11B 20/12

(54) **Recording type optical disc apparatus and optical disc medium**

(30) Priority: 08.12.2005 JP 2005354764
(71) Applicant: NEC CORPORATION, Minato-ku, Tokyo 108-8001 (JP)
(72) Inventor: Yamanaka, Yutaka c/o NEC Corporation, Tokyo, Tokyo 108-8001 (JP)
(74) Representative: Vossius & Partner

(57) **Abstract**

An optical disc apparatus includes an optical head configured to irradiate a light beam to an optical disc medium to record and reproduce data, wherein the optical disc medium has a record track which is divided into an inner circumferential control data recording area, a user data recording area and an outer circumferential control data recording area from an inner circumferential side; and a control unit configured to control a position of the optical head and to supply data to be recorded to the optical head. After a user data is recorded in the user data recording area, an ending process state data which shows a progress state of an ending process for recording a control data in a predetermined area of the user data recording area is recorded in a predetermined area of the inner circumferential control data recording area.

## Description

The present invention relates to a recording type optical disc apparatus for recording and reproducing a data by using a small beam spot, an optical disc medium used for the same.

### 2. Description of the Related Art

In an optical disc apparatus field in which a data is recorded and reproduced by using a small beam spot, CD-R (Compact Disc Recordable) and DVD-R (Digital Versatile Disc Recordable) as optical disc media in which the data can be recorded are widely spread, in addition to a ROM (Read Only Memory) medium dedicated for reproduction in which an embossed data pit row is formed in advance. Also, there are optical disc media referred to as CD-RW (CD-ReWritable) and DVD-RW (DVD-ReWritable) in which recorded data can be rewritten. Moreover, a standard for HD DVD-R using a blue beam source as a next generation DVD is edited. Here, the optical disc media that can record the data are generally referred to as a recording type optical disc medium.

In the recording type optical disc medium, a spiral groove track for tracking is formed on an optical disc substrate, and a recording layer made of organic material and the like is formed thereon. A laser beam of high power is focused to this recording layer and partially modified to form record pits. Thus, the data is recorded. After the data is recorded, a servo signal having substantially the same characteristics as the ROM medium in which a embossed data pit row is formed can be obtained, which gives a merit that the data can be easily reproduced by a driving apparatus dedicated to reproduction.

Moreover, recently, an optical disc medium is developed and begins to be manufactured and marketed, in which two recording layers are formed to increase a record capacity and a recording/reproducing operation is carried out from a same substrate surface. For example, in DVD-R, the two-layer medium begins to be manufactured and marketed.

In the recording type optical disc medium, a recording process which is referred to as an ending process or finalizing is required to attain a format similar to that of the ROM medium dedicated for reproduction after a user data is recorded. As for the finalizing, for example, a conventional technique disclosed in JP-P2005-310321A is known. According to this technique, an optical disc medium contains a data area and a system area. The data area contains at least a area with a boarder and a boarder area arranged in an outer circumferential end of the area with the boarder. The system area contains a record control data area to record a record control data necessary to record a user data in the data area. The data area further contains a lead-out area at the outer circumferential end of the boarder area that is arranged in the outermost circumference. The lead-out area has a record capacity equal to or less than that of the boarder area recorded in the outermost circumference, and a data for finalizing is recorded therein. For example, in the recording type optical disc medium of a single layer, it is supposed that the user data is recorded from the inner circumferential side to the outer circumferential side. In this case, in the finalizing, it is necessary to record a data indicating a control area with a predetermined width or more on the outer circumferential side of a area where the user data is recorded, in order to attain the same format as the ROM medium. This control area is referred to as a lead-out area, and its width is required to be in a range between 50 µm and several 100 µm or more in a radius direction in many cases. Thus, in order to record the data in this area, there may be a case that a record time of 10 seconds or more is needed.

Moreover, a 2-layer recording type optical disc medium, there may be a case that an ending process is required to define the remaining portion of the user data area as an already-recorded area, when the recording of the user data is ended in the middle of the user data area. This is because the 2-layer ROM medium has as the assumption, the format that at a radius position where data is already recorded in one recording layer, a record pits are formed in the other recording layer. Thus, in the 2-layer recording type optical disc medium, there is a case that the recording for the ending process is required for a longer time after the recording of the user data. That is, a user had to wait for the completion of the ending process for the long time as mentioned above.

In conjunction with the above description, a DVD-R recording apparatus is described in

JP-P2003-331430A. In this conventional example, data can be recorded on an optical disc medium in a predetermined record format only once and data can be additionally recorded. Whether or not a user data reaches a predetermined position of an optical disc medium is determined. When it is determined not to reach the predetermined position, a data area of a predetermined size where no data has been recorded is secured between the recorded data and the predetermined position. The optical disc medium is set to a reproducible state by setting the above data area to a same state as a redundant data is recorded.

Also, a method of additional write of a finalized rewritable optical disc medium is described in Japanese Laid Open Patent Application (JP-P2001-110055A). In this conventional, a recording operation to a lead-in area, a program area, and a lead-out area of CD-RW disc is completed effectively. A new track is overwritten following a record termination position of effective recorded track in the program area. A lead-in data in the lead-in area is erased after the additional write. Or, the lead-in data is overwritten to coincide with the data after the additional write. In this way, when the new track is added to the finalized CD-RW disc, a waiting time can be reduced.

An information reproduction apparatus is described in Japanese Laid Open Patent Application (JP-P2001-312879A). In this conventional example, various data are read out from a recording medium in which a medium identifying data to distinguish each medium, a management data which manages data recorded on the medium, and a predetermined data made accessible based on this management data, in response to a request. The medium identifying data and the management data are read out and an access data is extracted from the management data for access to the predetermined data. The medium identifying data and the access data are linked and held. A medium identifying data is read out from the recording medium and when the read medium identifying data is coincident with the held medium identifying data, the recording medium is accessed based on the access data so as to reproduce a data.

It is therefore an object of the present invention to provide an optical disc apparatus and an optical disc medium that can stop an ending process.

In an aspect of the present invention, an optical disc apparatus includes an optical head configured to irradiate a light beam to an optical disc medium to record and reproduce data, wherein the optical disc medium has a record track which is divided into an inner circumferential control data recording area, a user data recording area and an outer circumferential control data recording area from an inner circumferential side; and a control unit configured to control a position of the optical head and to supply data to be recorded to the optical head. After a user data is recorded in the user data recording area, an ending process state data which shows a progress state of an ending process for recording a control data in a predetermined area of the user data recording area is recorded in a predetermined area of the inner circumferential control data recording area.

Here, the ending process state data may contain a flag data which shows one of completion of the ending process, continuation of the ending process, and non-execution of the ending process.

Also, the ending process state data may further contain an address data which shows a recorded area, in which the control data has been recorded, of a predetermined area in the user data recording area.

Also, the control unit continues the ending process based on the ending process state data recorded in the predetermined area of the inner circumferential control data recording area.

Also, the ending process state data may contain a flag data which shows completion of the ending process, continuation of the ending process, and non-execution of the ending process. The control unit continues the ending process when the flag data shows the ending process continuation.

Also, when the ending process state data shows the continuation of the ending process, the ending process state data may contain an address data which shows a recorded area, in which the control data has been recorded, of the predetermined area of the user data recording area. The control unit may set an address position of the control data to be recorded based on the address data.

In another aspect of the present invention, a method of accessing an optical disc medium from an incident surface to a record layer through a transmission layer thereof, wherein a spiral record track formed on the recording layer is divided into an inner circumferential control data recording area, an user data recording area and an outer circumferential control data recording area from an inner circumferential side, is achieved by recording a user data in the user data recording area; by carrying out an ending process to record a control data in a predetermined area of the user data recording area, after the user data is recorded; and by recording an ending process state data showing a progress state of the ending process in a predetermined area of the inner circumferential control data recording area.

Here, the ending process state data may include a flag data which shows one of completion of the ending process, continuation of the ending process, and non-execution of the ending process, and an address data which identifies a recorded portion in which the control data has been recorded.

Also, the method may be achieved by further detecting the address data when the flag data shows the continuation of the ending process; and continuing a recording operation of the control data based on the detected address data.

In a still another aspect of the present invention, an optical disc medium includes a transmission layer having an incident surface to which an incident light beam is irradiated; and a recording layer on which a recordable spiral record track is formed, and on/from which a recording operation and a reproducing operation are carried out by using a focused spot of the light beam received through the transmission layer from the incident surface. A spiral record track formed on the recording layer is divided into an inner circumferential control data recording area, a user data recording area and an outer circumferential control data recording area from an inner circumferential side. The inner circumferential control data recording area has a record state data section in which a recording state of the user data recording area is saved, and the inner circumferential control data recording area has a record state data section in which an ending process state data is recorded to show a progress state of an ending process in which a control data is recorded in a predetermined area of the user data recording area after a user data is recorded in the user data recording area.

Here, the ending process state data may contain a flag data which shows one of continuation of the ending process, completion of the ending process, and a non-execution of the ending process.

Also, the ending process state data may contain an address data which shows a recorded area in which the control data has been recorded.

Also, the recording layer may be 2-layer recording layer.

Hereinafter, an optical disc apparatus and an optical disc medium of the present invention will be described in detail with reference to the attached drawings.
Fig. 1 is a diagram showing a configuration of an optical disc system according to an embodiment of the present invention;
Fig. 2 is a diagram showing a configuration of an optical disc apparatus according to the embodiment of the present invention;
Fig. 3 is a diagram showing a recording type optical disc medium according to according to the embodiment of the present invention;
Fig. 4 is a sectional view showing a layout of the optical disc medium of a single layer according to the embodiment;
Fig. 5 is a sectional view showing the optical disc medium of the single layer during an ending process according to the embodiment;
Fig. 6 is a sectional view showing a layout of the optical disc medium of two layers according to the embodiment;
Fig. 7 is a view explaining the optical disc medium of the two layers during the ending process according to the same;
Fig. 8 is a sectional view showing the optical disc medium of the two layers during the ending process according to the same; and
Fig. 9 is a flowchart showing a process for finalizing according to the same.

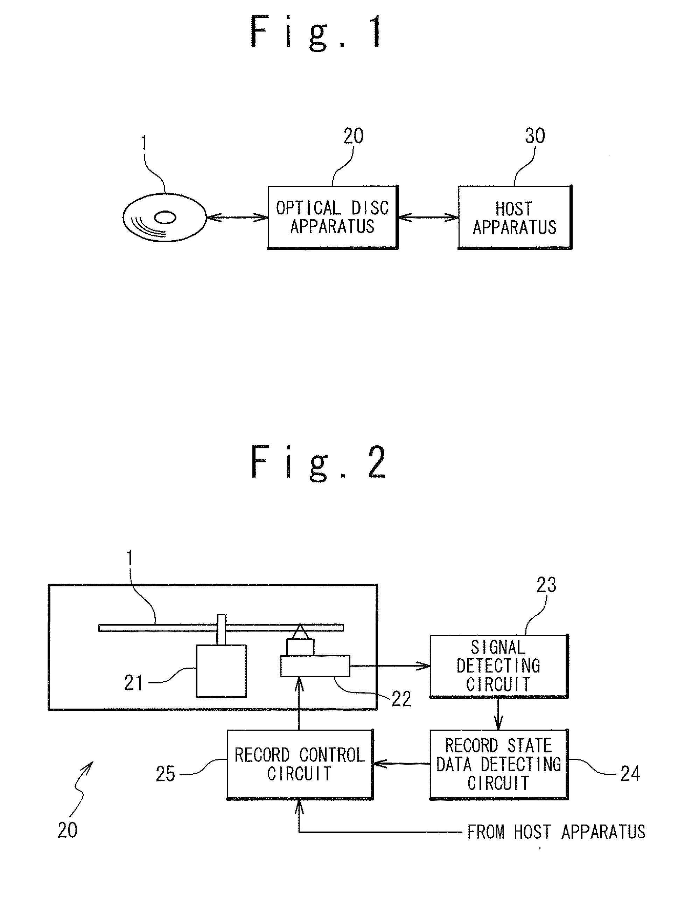

Fig. 1 is a diagram showing the configuration of the optical disc system of the present invention. An optical disc medium 1 such as a DVD disc is set for an optical disc apparatus 20. The optical disc apparatus 20 records a data on the optical disc medium 1 in accordance with a command from a host apparatus 30 and reads the data from the optical disc medium 1. Also, after ending write of all user data, the optical disc apparatus 20 carries out an ending process (finalizing) in response to a command from the host apparatus 30.

Fig. 2 is a block diagram showing the configuration example of the optical disc apparatus 20 of the present invention. The optical disc apparatus 20 contains a spindle 21, an optical head 22, a signal detecting circuit 23, a record state data detecting circuit 24 and a record control circuit 25. The optical disc medium 1 of a single layer or two layers is set to the spindle 21. The optical head 22 emits a laser beam to the optical disc medium 1 and records and reproduces a data. The signal detecting circuit 23 detects various signals included in a reproduction signal reproduced by the optical head 22 to output to the record state data detecting circuit 24. The record state data detecting circuit 24 detects a flag indicating a state of an ending process and detects an address data in case of continuation of a recording operation. The record control circuit 25 carries out a record control to record a predetermined data at a desired position, in accordance with those detection results and a command from the host apparatus 30.

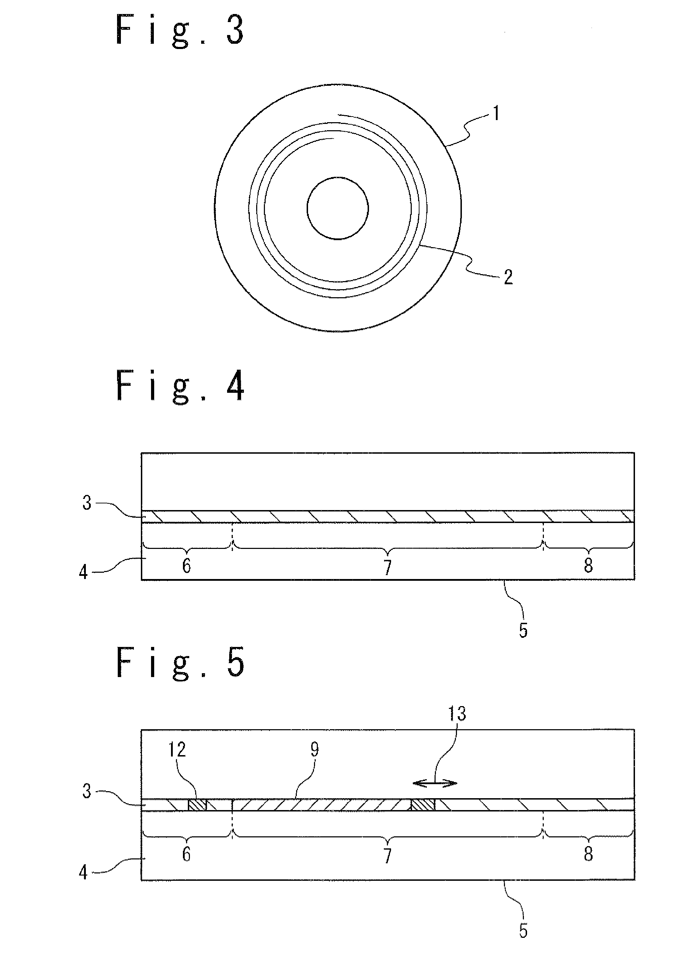

As shown in Fig. 3, a spiral record track 2 is formed on the record type optical disc medium 1. Fig. 4 is a diagram showing a section of the optical disc medium 1 in the radius direction. The left side of Fig. 4 is an inner circumferential side, and the right side thereof is an outer circumferential side. A recording/reproducing operation is carried out by forming a focused spot of a laser beam on a recording layer 3. The laser beam is outputted from the optical head 22 to the optical disc medium 1 through the lower portion of Fig. 4. Thus, the laser beam is inputted from an input surface 5, passes through a transmission layer 4 and generates the focused spot of light on the recording layer 3. The record track 2 of the recording layer 3 is divided into an inner circumferential control data recording area 6, a user data recording area 7 and an outer circumferential control data recording area 8 in order from the inner circumferential side. Also, although not shown, a tracking groove whose wavelength order is micro is formed in the recording layer 3. Moreover, there is a case that a groove dedicated for reproduction is formed in a part of the inner circumferential control data recording area 6. The inner circumferential control data recording area 6 and the outer circumferential control data recording area 8 include a test record section for testing an optimal recording condition, a record state data section for recording a layout data of the entire optical disc medium 1 and a record state, and the like.

As mentioned above, the optical disc apparatus 20 for recording the data in the optical disc medium 1 sequentially records the user data from the inner circumferential side of the user data recording area 7 in accordance with a command from the host apparatus 30. In the process for recording the user data, the test record sections of the inner circumferential control data recording area 6 and the outer circumferential control data recording area 8, the record state data section of the inner circumferential control data recording area 6, and the like are properly used.

Fig. 5 shows a section of the optical disc medium 1 in the radius direction after the recording of the user data is finished. The user data recording area 7 is divided into a user data recorded section 9 in which the user data has been recorded, an ending process record section 13 in which a control data different from the user data has been recorded, and a non-record section in which nothing is recorded. Fig. 5 shows a situation that the control data has been recorded until an approximate half of the ending process record section 13. The ending process record section 13 requires a width between about 50 µm and several 100 µm in the radius direction in many cases. Thus, it takes the time of 10 seconds or more in many cases to record in the entire ending process record section 13. While the control data is recorded in this ending process record section 13, the host apparatus 30 which controls the optical disc apparatus 20 and the user who operates the host apparatus 30 consequently become in a wait state.

The optical disc apparatus 20 records the data indicating a state of the ending process in a record state data section 12 arranged in the inner circumferential control data recording area 6 after the completion of the recording of the user data. That is, a flag indicating the record state of this ending process record section 13 is set in the record state data section 12. This flag may indicate one of three states of "a non-recorded state", "a recording continuation state" and "an already-recorded state". Thus, two bits are assigned to the flag. The assignment state of this flag can be set as follows by using a binary number representation.
(1) 00b; Non-Recorded State
(2) 01b; Recording Continuation State
(3) 11b; Already-Recorded State

When the recording in the ending process record section 13 is in the course of the recording operation, the data of a last address in which the control data has been recorded is recorded at the same time, for example. In the typical optical disc medium 1, the address indicating a position inside the record track can be represented by 3 to 4 bytes. Therefore, the record state of the ending process record section 13 can be stored by recording the address data of 3 to 4 bytes together with the two-bit flag in the record state data section 12. The optical disc apparatus 20 can quickly recognize the state of the ending process by referring to the flag data recorded in the record state data section 12. If the ending process is in the recording continuation state of the control data, the optical disc apparatus 20 can easily resume the additional recording on a non-recorded portion by referring to the address data. That is, when this data is recorded, the ending process can be again resumed and continued, even if the recording continuation state of the control data in the ending process is stopped or suspended. Also, even if the optical disc medium 1 is taken out from the optical disc apparatus 20 in the recording continuation state and then loaded in another optical disc apparatus, the ending process can be resumed and continued.

At this time, if only the flag is recorded in the record state data section 12, the recording area must be searched to find out the last position of the already-recorded portion. Thus, it takes a time. Also, if only the address data is recorded, it is impossible to judge whether the ending process is completed or stopped. Then, it takes a time to determine by comparing with another recording area data. Since both of the flag and address data are recorded, the processing of the optical disc apparatus 20 becomes simple.

In this way, if the flag data and address data which indicate the record state of the control data in the ending process are recorded in the optical disc medium 1, it is easy to stop the ending process in the course thereof and resume. Thus, it is possible to divisionally execute the ending process when a wait time can be reserved, according to the convenience of the user and the host apparatus 30.

In Fig. 5, the ending process record section 13 is set for only the inside of the user data recording area 7. When a record capacity of the user data is large and the user data record section 9 reaches a vicinity of the outer circumferential end of the user data recording area 7, the ending process record section 13 may be reserved over the outer circumferential control data recording area 8. In this case, the flag data and address data which indicate the record state may be recorded under assumption that they include the outer circumferential control data recording area 8. Also, there is a case that the ending process requires a recording operation to a predetermined area of the inner circumferential control data recording area 6. However, the flag data and address data may be set, including the state of the recording process to this predetermined area.

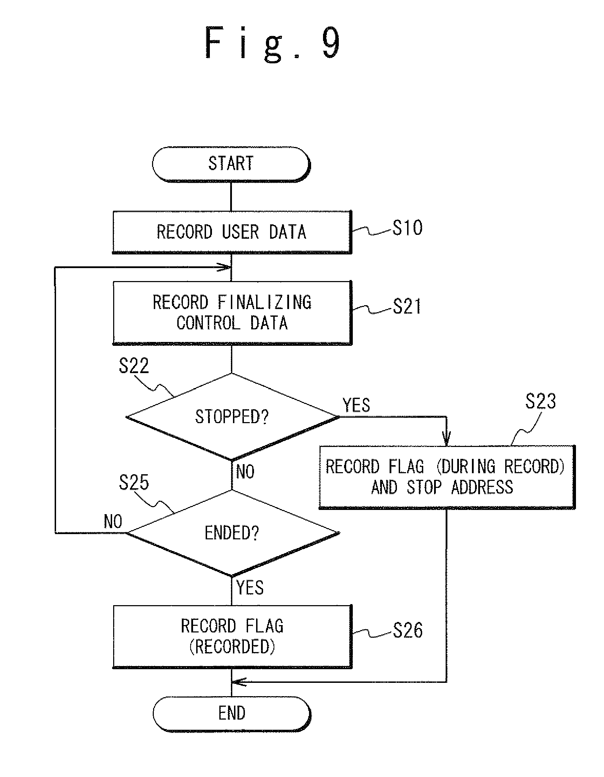

The operation of the optical disc apparatus 20 on the recording in the record state data section 12 of the optical disc medium 1 will be described below with reference to Fig. 9. Fig. 9 is a flowchart showing the operation of the optical disc apparatus 20 in the ending process.

The optical disc apparatus 20 sequentially records the user data in the user data recording area 7 in the recording layer 3 of the optical disc medium 1 in accordance with a command from the host apparatus 30 (Step S10). In the state that the recording of the user data is completed, the user data recording area 7 in which the user data has been recorded is shown differently as the user data record section 9 in Fig. 5.

At the time of the recording completion of the user data, the optical disc apparatus 20 carries out the ending process. In the ending process, the ending process record section 13 is set, following the user data record section 9. The area in a range of about 50 µm to several 100 µm in the radius direction is set as the ending process record section 13. The optical disc apparatus 20 sequentially records the control data different from the user data in the ending process record section 13 (Step S21).

When the ending process is being carried out for a long time, the optical disc apparatus 20 checks whether or not the ending process should be stopped or suspended due to, for example, an instruction from the user or the host apparatus 30 (Step S22). If the ending process is stopped or suspended (Step S22-Y), the flag data indicating "Recording Continuation State" and the address data indicating the last address in which the control data has been recorded are recorded in the record state data section 12 (Step S23). When the flag data and the address data are recorded in the record state data section 12, the optical disc apparatus 20 stops or suspends the ending process, and the optical disc medium 1 is set to a state that the disc medium 1 can be removed from the optical disc apparatus 20.

If the ending process is not stopped or suspended (Step S22-N), the optical disc apparatus 20 records the control data until the whole of the ending process record section 13 is set to the recorded state (Step S25-N). When the recording operation of the control data on the ending process record section 13 has been completed (Step S25-Y), the optical disc apparatus 20 records the flag data indicating "Already Recorded State" on the record state data section 12 (Step S26) and completes the ending process.

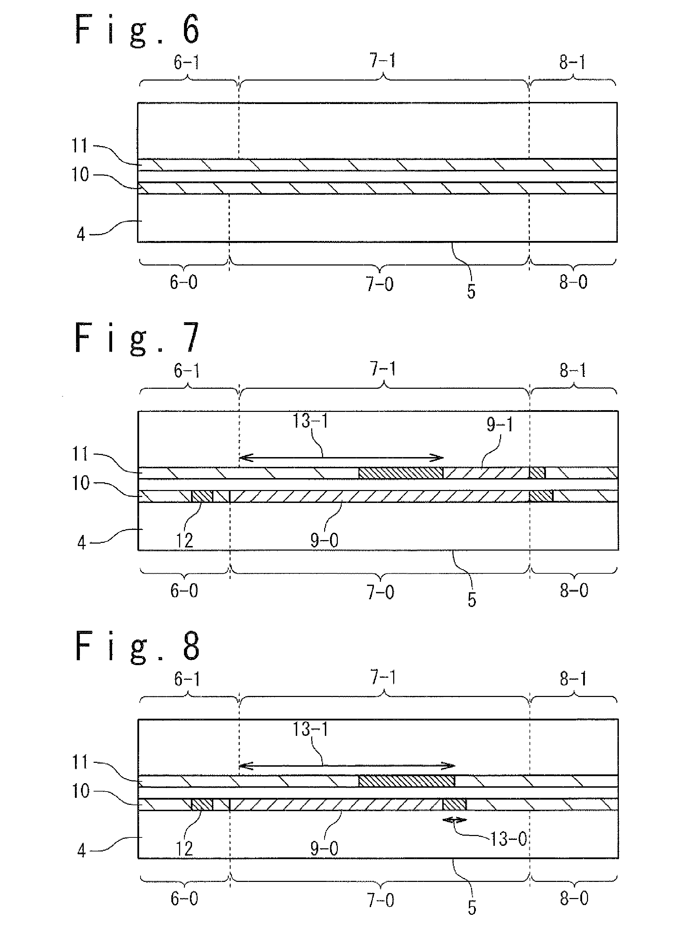

A case of the optical disc medium 1 having a 2-layer recording layer will be described below. Fig. 6 shows a section of the optical disc medium 1 in the radius direction, and the optical disc medium 1 has the 2-layer recording layer composed of a recording layer (0) 10 and a recording layer (1) 11. The left side of Fig. 6 shows the inner circumferential side, and the right side shows the outer circumferential side. The laser beam is inputted from the input surface 5 of the optical disc medium 1, passes through the transmission layer 4 to the 2-layer recording layer composed of the recording layer (0) 10 and the recording layer (1) 11, similarly to a case of the single layer. Then, the recording and reproducing operations are carried out by using a focused spot of light. In most of the 2-layer recording layer recording media, the recording operation is carried out to the record track of the recording layer (0) 10 from the inner circumferential side to the outer circumferential side, and the recording operation is carried out to the record track of the recording layer (1) 11 from the outer circumferential side to the inner circumferential side. Thus, this 2-layer recording layer is designed such that the data of a large capacity to recorded for a long time can be recorded by linking the two recording layers.

Similarly to the case of the single layer, the record track of the recording layer 10 is divided into an inner circumferential control data area 6-0, a user data recording area 7-0 and an outer circumferential control data recording area 8-0 from the inner circumferential side, and the record track of the recording layer 11 is divided into an inner circumferential control data area 6-1, a user data recording area 7-1 and an outer circumferential control data recording area 8-1. The outer circumferential control data recording areas 8-0, 8-1 correspond to folded portions and may be referred to as middle areas. There is a case that the radius positions of the boundaries between the respective areas are not aligned, in order to avoid the interference between the recording layer (0) 10 and the recording layer (1) 11. Also, although not shown, tracking grooves whose wavelengths are micro are formed in the recording layers 10, 11. Moreover, there is a case that a pit area dedicated for reproduction is formed in a part of the inner circumferential control data recording areas 6-0, 6-1. Those control data recording areas 6-0/1, 8-0/1 include test record sections used for testing the optimal record condition, record state data sections used for recording the record states and the layout data of the entire optical disc medium 1, and the like.

When recording a user data on the optical disc medium 1, the optical disc apparatus 20 sequentially records the user data from the inner circumferential side of the user data recording area 7-0 in the recording layer (0) 10 in accordance with a command from the host apparatus 30. At the time of reaching the outer circumferential end of the user data recording area 7-0, next, the user data is sequentially recorded from the outer circumferential side of the user data recording area 7-1 in the recording layer (1) 11. In the recording operation of the user data, the test record sections of the inner circumferential control data recording areas 6-0/1 and the outer circumferential control data recording areas 8-0/1; the record state data sections of the inner circumferential control data recording areas 6-0/1, and the like.

Fig. 7 shows a section of the 2-layer optical disc medium 1 in the radius direction after the recording of the user data is ended. In Fig. 7, the user data is recorded in the whole of the user data recording area 7-0, which then becomes a user data record section 9-0. The control data indicating the outer circumferential end of the user data record section 9-0 is recorded in the outer circumferential control data recording area 8-0. In the user data recording area 7-1, the user data is recorded until the middle thereof, and it is divided into a user data record section 9-1 and an ending process record section 13-1. The control data indicating the beginning of the user data in the user data record section 9-1 is recorded in the outer circumferential control data recording area 8-1.

In this way, the data is recorded in the user data recording area 7-1 so that the non-record portion does not exist therein. This is because in the user data recording areas 7-0/1, after the completion of the recording in the user data record units 9-0/1, the user data recording area 7-1 in which the user data is not recorded needs to be entirely recorded as the ending process record section 13-1. That is, when the recording layer has the 2-layer structure, the same radius position of the recording layer (1) 11 as the user data record section 9-0 that is in the already-recorded state in the recording layer (0) 10 needs to be treated as the already-recorded state.

Therefore, when the user data has a capacity that is recorded in only the user data record section 9-0, the whole of the user data recording area 7-1 becomes the ending process record section 13-1. Until a predetermined data is recorded in the whole of the user data recording area 7-1, the host apparatus 30 that controls the optical disc apparatus 20 and the user who operates the host apparatus 30 are in the wait state. For this reason, similarly to the case of the single layer, the optical disc apparatus 20 records the data indicating the state of the ending process after the completion of the recording of the user data in the record state data section 12 arranged in the inner circumferential control data recording areas 6-0/1. The optical disc apparatus 20 can quickly recognize the record state of the ending process record section 13-1 from the flag data and the address data recorded in the record state data section 12. If the ending process is in the course of the recording operation of the control data, the optical disc apparatus 20 can easily resume an additional recording operation in the non-record portion by referring to the address data. That is, if this data is recorded, even in case of the stop in the recording course of the control data of the ending process, the ending process can be again continued. Also, in case of the optical disc medium 1 taken out from the optical disc apparatus 20 in the course of the recording operation and then loaded to another optical disc apparatus, the ending process can be similarly continued. For example, in the 2-layer optical disc medium that can record the data corresponding to totally four hours, there may be a case that the ending process requires one hour or more. Thus, in order that the recording operation of the control data in the ending process record section 13-1 is stopped or suspended and resumed at any time point, the recording operation of the flag data and the address data in the record state data section 12 is effective as compared with the optical disc medium of the single layer.

The state shown in Fig. 7 implies a case that the user data record section 9-1 ends in the middle of the recording layer (1) 11. However, as shown in Fig. 8, the ending process is required even the case where the user data record section 9 ends in the middle of the recording layer (0) 10. This case requires that the ending process record section 13-0 is arranged in a predetermined width in the outer circumferential end of the user data record section 9-0 of the recording layer (0) 10 and that the recording operation is performed on the wide range of the recording layer (1) 11 corresponding to the user data record section 9-0 as the ending process record section 13-1. In this case, the control data having an amount corresponding to the user data record section 9-0 is required to be recorded in the ending process record section 13-1 as the ending process. Thus, the usefulness of the present invention is provided more and more.

As mentioned above, the optical disc apparatus 20, when the necessity of the stop or suspension in the course of the ending process is generated by receiving an instruction or command of the record stop from the host apparatus 30 and the like, records the flag data and the address data in the record state data section 12 and stops the ending operation. Also, if detecting the optical disc medium 1 in the course of recording operation as mentioned above, the optical disc apparatus 20 detects the flag data and the address data and resumes the additional recording of the non-record portion. Since the optical disc apparatus 20 has such functions, there is a merit that the host apparatus 30 or the user can set the time of the ending process in a free time. The foregoing interruption operation is effective in common for the optical disc medium of a write once type in which the data can be recorded only once or the optical disc medium of a rewritable type.

According to the present invention, it is possible to provide the recording type optical disc apparatus and the optical disc medium that can stop the ending process. According to the present invention, the user is not required to wait for the completion of the ending process for a long time.

## Claims

1. An optical disc apparatus comprising:
an optical head configured to irradiate a light beam to an optical disc medium to record and reproduce data, wherein said optical disc medium has a record track which is divided into an inner circumferential control data recording area, a user data recording area and an outer circumferential control data recording area from an inner circumferential side; and
a control unit configured to control a position of said optical head and to supply data to be recorded to said optical head,
wherein after a user data is recorded in said user data recording area, an ending process state data which shows a progress state of an ending process for recording a control data in a predetermined area of said user data recording area is recorded in a predetermined area of said inner circumferential control data recording area.

2. The optical disc apparatus according to claim 1, wherein said ending process state data contains a flag data which shows one of completion of said ending process, continuation of said ending process, and non-execution of said ending process.

3. The optical disc apparatus according to claim 2, wherein said ending process state data further contains an address data which shows a recorded area, in which said control data has been recorded, of a predetermined area in said user data recording area.

4. The optical disc apparatus according to claim 1, 2 or 3,
wherein said control unit continues said ending process based on said ending process state data recorded in the predetermined area of said inner circumferential control data recording area.

5. The optical disc apparatus according to claim 4, wherein said ending process state data contains a flag data which shows completion of said ending process, continuation of said ending process, and non-execution of said ending process, and
said control unit continues said ending process when said flag data shows the ending process continuation.

6. The optical disc apparatus according to claim 5, wherein said ending process state data shows the continuation of said ending process,
said ending process state data contains an address data which shows a recorded area, in which said control data has been recorded, of the predetermined area of said user data recording area, and
said control unit sets an address position of said control data to be recorded based on said address data.

7. A method of accessing an optical disc medium from an incident surface to a record layer through a transmission layer thereof, wherein a spiral record track formed on said recording layer is divided into an inner circumferential control data recording area, an user data recording area and an outer circumferential control data recording area from an inner circumferential side, comprising:
recording a user data in said user data recording area;
carrying out an ending process to record a control data in a predetermined area of said user data recording area, after said user data is recorded; and
recording an ending process state data showing a progress state of said ending process in a predetermined area of said inner circumferential control data recording area.

8. The method according to claim 7, wherein said ending process state data includes a flag data which shows one of completion of said ending process, continuation of said ending process, and non-execution of said ending process, and an address data which identifies a recorded portion in which said control data has been recorded.

9. The method according to claim 8, further comprising:
detecting said address data when said flag data shows the continuation of said ending process; and
continuing a recording operation of said control data based on the detected address data.

10. An optical disc medium comprising:
a transmission layer having an incident surface to which an incident light beam is irradiated; and
a recording layer on which a recordable spiral record track is formed, and on/from which a recording operation and a reproducing operation are carried out by using a focused spot of said light beam received through said transmission layer from said incident surface,
wherein a spiral record track formed on said recording layer is divided into an inner circumferential control data recording area, an user data recording area and an outer circumferential control data recording area from an inner circumferential side,
said inner circumferential control data recording area has a record state data section in which a recording state of said user data recording area is saved, and
said inner circumferential control data recording area has a record state data section in which an ending process state data is recorded to show a progress state of an ending process in which a control data is recorded in a predetermined area of said user data recording area after a user data is recorded in said user data recording area.

11. The optical disc medium according to claim 10, wherein said ending process state data contains a flag data which shows one of continuation of said ending process, completion of said ending process, and a non-execution of said ending process.

12. The optical disc medium according to claim 11, wherein said ending process state data contains an address data which shows a recorded area in which said control data has been recorded.

13. The optical disc medium according to any one of claims 10 to 12, wherein said recording layer
comprises 2-layer recording layer.
